# EUROPÄISCHE PATENTSCHRIFT

(11) **EP 2 779 019 B1**
(45) Veröffentlichungstag und Bekanntmachung des Hinweises auf die Patenterteilung: **21.12.2016**
(21) Anmeldenummer: 13158758.6
(22) Anmeldetag: 12.03.2013
(51) Int. Cl.: G06K 7/10, G02B 6/38, H01R 9/24, H04Q 1/02

(54) **System und Verfahren zur Feststellung des Verbindungszustands wenigstens zweier örtlich getrennt angeordneter Systemgeräte zueinander**
System and method for diagnosing the state of a link between at least two system devices in different locations
Système et procédé de détermination de l'état de liaison d'au moins deux appareils d'un système séparés dans l'espace l'un par rapport à l'autre

(43) Veröffentlichungstag der Anmeldung: 17.09.2014
(73) Patentinhaber: KTS Kommunikationstechnik und Systeme GmbH, 41238 Mönchengladbach (DE)
(72) Erfinder: Kotyrba, Gregor, 47877 Willich (DE)
(74) Vertreter: Meyer, Ludgerus

(56) Entgegenhaltungen:
- EP-A1- 2 333 691
- US-A1- 2010 098 425

## Beschreibung

Die Erfindung betrifft eine Verbindungsleitung zur Übertragung von Daten, Energie und Fluiden zwischen zwei örtlich getrennten Systemgeräten nach dem Oberbegriff des Anspruchs 1.

Die Erfindung betrifft ferner ein System und ein Verfahren zur Feststellung des Verbindungszustands wenigstens zweier örtlich getrennt angeordneter Systemgeräte zueinander nach dem Oberbegriff der Ansprüche 8 und 11.

Aus der EP 2 333 691 A1, auf deren Inhalt Bezug genommen wird, ist ein System zur Lokalisierung eines Objekts mittels eines RFID-Transpondersystems bekannt, bei dem an einem ersten Ort eine RFID-Leseeinheit angeordnet ist und sich an einem zweiten Ort ein Transponder befindet. Der RFID-Leseeinheit ist eine erste Antenne zugeordnet, und in räumlicher Nähe des RFID-Transponders befindet sich eine zweite Antennenanordnung, wobei die Antennenanordnungen über eine elektrische Leitungsverbindung miteinander verbunden sind. Die Auslesung des RFID-Transponders erfolgt dabei über den Empfang des RFID-Transpondersignals an der entfernten zweiten Antenne, Übertragung des Signals über die Leitungsverbindung zur ersten Antenne und Empfang von der ersten Antenne an der RFID-Leseeinheit. Wenn die Antennenanordnungen an den Enden von Datenkabeln angeordnet sind, lässt sich auf diese Weise eine Identifizierung und Lokalisierung entfernter RFID-Transponder erreichen, die in einem entfernten Systemgerät enthalten sind, um so in einem Kabelmanagementsystem eine entfernte Auslesung einer Buchsenbelegung von System- oder Anschlussgeräten zu ermöglichen.

Aus der EP 1 837 798 A2 ist ein RFID-Antennenbrückensystem bekannt, bei dem eine erste Antenne in die Nähe eines Tags gebracht wird und das über die Antenne empfangene Signal über eine Kabelverbindung an eine zweite Antenne übertragen wird, der eine Readereinheit zugeordnet ist. Damit kann die Erfassungsentfernung zur Auslesung eines Tags beträchtlich erhöht werden.

Das in der genannten EP 2 333 691 A1 angegebene System verwendet Datenkabel, die üblichen Standarddatenkabeln entsprechen. Zwar kann mit diesem System das Vorhandensein eines entfernten Transponders festgestellt werden, jedoch nicht, ob die Datenverbindung erfolgreich hergestellt wurde. Es kann ferner nicht ermittelt werden, ob das verwendete Datenkabel den geforderten Ansprüchen an die Datenübertragungssicherheit genügt.

Der Erfindung liegt die Aufgabe zugrunde, ausgehend von der EP 2 333 691 A1 eine Verbindungsleitung anzugeben, die zur Übertragung von Daten, Energie oder Fluiden zwischen zwei örtlich getrennt angeordneten Systemgeräten geeignet ist, welche in einem System verwendbar ist, das die Eigenschaften und den Verbindungszustand der Verbindungsleitung auswerten kann.

Die Erfindung betrifft ferner ein System, das zur Feststellung des Verbindungszustands wenigstens zweier örtlich getrennt angeordneter Systemgeräte zueinander geeignet ist, das eine Auswertung von Art und Verbindungszustand der verwendeten Verbindungsleitung gestattet.

Die Erfindung betrifft schließlich ein Verfahren, das zur Feststellung des Verbindungszustands zweier örtlich getrennt angeordneter Systemgeräte zueinander geeignet ist.

Diese Aufgaben werden ausgehend von den jeweiligen Oberbegriffen durch die in den Ansprüchen 1, 5 und 11 angegebene Erfindung gelöst. Vorteilhafte Weiterbildungen der Erfindung sind in Unteransprüchen angegeben.

Bei dem erfindungsgemäßen System ist wenigstens eines der Kupplungselemente der Verbindungsleitung zwischen den Systemgeräten mit einem RFID-Kabeltransponder versehen, dessen darin gespeicherte Daten über physikalische Eigenschaften der Verbindungsleitung von einem RFID-Lesegerät an einem anderen der Systemgeräte lesbar und auswertbar sind.

Der dem Kupplungselement zugeordnete Kabeltransponder befindet sich dabei in der Nähe einer Antennenanordnung des jeweiligen Endes der Verbindungsleitung, so dass der Kabeltransponder von der zugeordneten Antennenanordnung auslesbar ist. Die von der Antennenanordnung erfasste Information kann über die Leitungsverbindung zwischen den Antennenanordnungen übertragen und am RFID-Lesegerät gelesen und ausgewertet werden, wenn sich der Kabeltransponder am entfernten Ende der Leitungsverbindung befindet. Wenn der Kabeltransponder an dem Ende der Verbindungsleitung angeordnet ist, das dem RFID-Lesegerät zugeordnet ist, erfolgt eine Auslesung über die dem RFID-Lesegerät unmittelbar zugeordnete Antenne oder auch direkt vom RFID-Lesegerät, sofern die räumliche Anordnung zwischen Kabeltransponder und RFID-Lesegerät ausreichend eng benachbart ist.

Der Kabeltransponder enthält Daten über physikalische Eigenschaften der Verbindungsleitung. Bei einem elektrischen Kabel können diese physikalischen Eigenschaften z. B. Dämpfung, die Kabellänge, Schirmungseigenschaften, Zahl der Leiter, Herstellerangaben, Identifikationsnummern, Herstellungsdaten und anderes sein. Bei einem Lichtwellenleiterkabel können das Dämpfungsmaß, die Spektraleigenschaften des Kabels, die Übertragungsgüte, zulässige Übertragungsgeschwindigkeit und andere Daten Gegenstand der zu übertragenden Information sein.

Die Erfindung ist jedoch nicht auf Anwendungen in der Datenübertragung beschränkt, sondern auch bei anderen Arten von Verbindungsleitungen verwendbar, wie Starkstromkabeln, aber auch bei Schläuchen, insbesondere Hydraulikschläuchen oder Fluidschläuchen, wobei die Erfindung insbesondere bei Verbindungsleitungen einsetzbar ist, die zwei Kupplungspunkte nur temporär miteinander verbinden. Neben der Verwendung in einem Kabelmanagementsystem, bei dem eine Vielzahl von Ports jeweils über eine Kabelverbindung flexibel miteinander verbindbar sein sollen, kann die Erfindung daher auch z. B. bei der Kopplung von Flüssigkeitsleitungen zwischen Aufnahme- und Abgabetanks oder im Maschinenbau zur flexiblen Ankopplung von Hydraulik- oder Pneumatikleitungen in Maschinen zum Einsatz kommen.

Unter einem Kabelmanagement ist nicht nur die Verwaltung von elektrischen oder optischen Kabeln und ihre Zuordnung zu Anschlusselementen in Systemgeräten zueinander zu verstehen, sondern auch die Verwaltung und ordnungsgemäße Verschaltung von Pneumatik- oder Hydraulikschläuchen.

Die wesentlichen Elemente der Erfindung sind wenigstens zwei örtlich getrennt angeordnete Systemgeräte, die über eine Verbindungsleitung miteinander verbunden werden sollen, ein RFID-Lesegerät in einem der Systemgeräte und ein RFID-Transponder in einem anderen Systemgerät, eine der Verbindungsleitung zugeordnete elektrische Leitungsverbindung zur elektrischen Kopplung von den an den Enden der Verbindungsleitung angeordneten Antennen, die jeweils in räumlicher Nähe des RFID-Lesegeräts und des RFID-Transponders stehen, sowie ein Kabeltransponder, der Eigenschaftsdaten der Verbindungsleitung beinhaltet und ebenfalls von einer der Antennenanordnungen auslesbar ist.

Eine erfindungsgemäße Verbindungsleitung ist dadurch gekennzeichnet, dass wenigstens eines ihrer Kupplungselemente mit einem RFID-Kabeltransponder versehen ist, der sich in Funkreichweite einer der Antennenanordnungen an einer der Verbindungsleitung zugeordneten Leitungsverbindung befindet. Die in dem Kabeltransponder gespeicherten Daten sind über eine der Antennenanordnungen auslesbar. Die Eigenschaften der Verbindungsleitung werden somit an das RFID-Lesegerät übertragen, wobei diese Eigenschaften physikalische Eigenschaften der Verbindungsleitung sind, die für den Einsatz der Verbindungsleitung relevant sind. Bei einem Datenkabel kann damit z. B. schnell festgestellt werden, ob ein zum Einsatz vorgesehenes Kabel die erforderlichen Übertragungseigenschaften erfüllt. Bei einer Hydraulikleitung kann z. B. festgestellt werden, ob die Leitung den gegebenen Hydraulikdrücken und Volumenströmen entsprechen kann.

Die Erfindung ist auch auf Verbindungsleitungen verwendbar, die als Y-Leitungen ausgebildet sind. In vielen Fällen genügt es dabei, dass ein Kabeltransponder an einem der Schenkel des Y-Endes des Kabels angeordnet ist. Bei anderen Einsatzszenarien können auch beide Schenkel jeweils mit einem selektiv identifizierbaren Kabeltransponder versehen sein, wenn eine Differenzierung der Kupplungselemente gewünscht ist.

Vorzugsweise befindet sich der Kabeltransponder auf einer Schaltungsplatine, die gleichzeitig die Antennenanordnung enthält, an einem der Kupplungselemente. Eine solche Platine kann entweder an das Kupplungselement direkt oder in dessen unmittelbarer Nähe angeflanscht werden, z. B. über eine Klippverbindung oder auch an das Kupplungselement angeklebt oder darin integriert sein. Wesentlich ist, dass die Antennenanordnung sowohl den Kabeltransponder auslesen kann als auch in der Lage ist, den Inhalt des im jeweiligen Systemgerät angeordneten RFID-Transponders auszulesen.

Die Verwendung eines Kabeltransponders erlaubt nicht nur die Identifizierung der jeweiligen Leitungsverbindung, sondern auch eine Analyse des Verbindungszustands der Verbindungsleitung. Gemäß dem erfindungsgemäßen Verfahren wird anhand der am RFID-Lesegerät empfangenen Daten festgestellt, ob zusätzlich zu den empfangenen Daten des RFID-Kabeltransponders weitere Daten eines RFID-Transponders eines entfernten zweiten Systemgeräts empfangen werden können, wenn sich der Kabeltransponder an dem dem RFID-Lesegerät gegenüberliegenden zweiten Ende der Verbindungsleitung befindet. Wenn auf diese Weise festgestellt wird, dass nur die Daten des Kabeltransponders, aber nicht die des RFID-Transponders im zweiten Systemgerät, empfangen werden, ergibt sich die Aussage, dass das entsprechende Kupplungselement entweder in einen fehlerhaften Port eingesteckt ist oder einen Port, dem kein RFID-Transponder zugeordnet ist. Wenn die den einzelnen Ports zugeordneten RFID-Kabeltransponder des zweiten Systemgeräts geeignet codiert sind, kann damit ohne weiteres festgestellt werden, ob das Kupplungselement in den "richtigen" Port eingesteckt ist.

Es kann natürlich auch festgestellt werden, ob das entfernte Kupplungselement überhaupt in einen Port eingesteckt ist oder freiliegt.

In einer zweiten Ausführungsart der Erfindung, bei der sich der Kabeltransponder an dem Ende der Verbindungsleitung befindet, dessen Kupplungselement in einen Port am ersten Systemgerät eingesteckt ist, das die RFID-Leseeinheit enthält, kann ebenfalls festgestellt werden, ob das Kupplungselement am anderen Ende der Verbindungsleitung in einen Anschlussport eingesteckt ist oder der "richtige" Port verwendet wird. Die verwendete Verbindungsleitung kann daher in wechselnder Anschlussrichtung verwendet werden, sofern die entsprechenden Kupplungselemente identisch ausgelegt sind. Es ist auch möglich, Kabeltransponder an beiden Enden des Kabels zu verwenden, wenn dies zur Unterscheidung der Kupplungselemente wünschenswert ist. Da jedoch die Antennenanordnungen in diesem Fall die Daten beider Kabeltransponder erfassen, kann ihre Unterscheidung nur dann erfolgen, wenn die Auslesung in unterschiedlicher Weise erfolgt, z. B. durch Verwendung unterschiedlicher Übertragungsfrequenzen der Kabeltransponder oder die Kabeltransponder andere unterscheidende Identifikationselemente oder -inhalte aufweisen.

Die Erfindung wird nachstehend anhand eines Ausführungsbeispiels näher erläutert. Es zeigen:
- Fig. 1a, b: eine schematische Ansicht der Erfindung, bei der sich der Kabeltransponder entweder am entfernten Systemgerät oder in der Nähe des RFID-Lesegeräts befindet, wobei sowohl der RFID-Transponder als auch der Kabeltransponder ausgelesen werden können,
- Fig. 2a, b: zeigt eine entsprechende Anordnung, bei der der RFID-Transponder im zweiten Systemgerät nicht gelesen werden kann, und
- Fig. 3a, b: zeigt eine Verbindung, bei der das erste Systemgerät von der Verbindungsleitung entkoppelt ist.

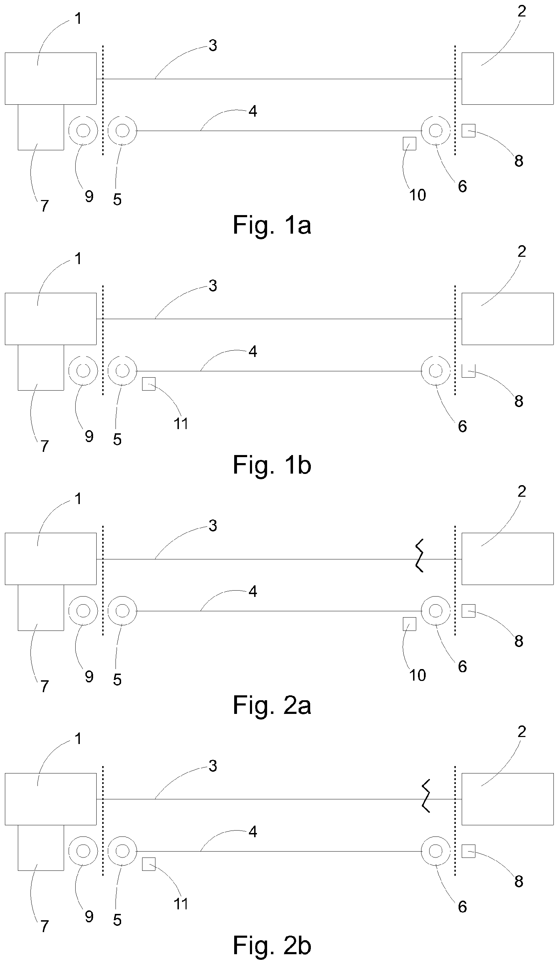

Bei der in Fig. 1 dargestellten Anordnung sind ein erstes Systemgerät 1 und ein zweites Systemgerät 2 über eine Verbindungsleitung 3 miteinander gekoppelt. Der Verbindungsleitung 3 ist eine elektrische Leitungsverbindung 4 parallel zugeordnet, die an den Enden der Leitungsverbindung zwei Antennenanordnungen 5 und 6 enthält, die sich in räumlicher Nähe eines RFID-Lesegeräts 7 bzw. eines RFID-Transponders 8 befinden. Das RFID-Lesegerät weist eine Leseantenne 9 auf, welche mit der Antenne 5 kommunizieren kann.

In Fig. 1 a ist ein Kabeltransponder 10 an dem Ende der Verbindungsleitung 3 angeordnet, das mit dem zweiten Systemgerät 2 gekoppelt ist. Die Auswertung des Verschaltungszustands am RFID-Lesegerät 7 ergibt, dass Daten sowohl vom entfernten RFID-Transponder 8 als auch vom Kabeltransponder 10 empfangen werden. Dieser Fall zeigt, dass die Kupplungsverbindung am entfernten zweiten Systemgerät 2 "richtig" eingesteckt ist und ferner, dass eine entsprechende Kupplungsverbindung an dem ersten Systemgerät vorhanden ist. Das RFID-Lesegerät 7 liest daher Daten sowohl vom entfernten RFID-Transponder 8 als auch vom Kabeltransponder 10.

In Fig. 1b liest das RFID-Lesegerät 7 ebenfalls Daten des entfernten RFID-Transponders 8 und des Kabeltransponders 11, wobei sich in diesem Fall der Kabeltransponder 11 im Umfeld des RFID-Lesegeräts 7 bzw. der Antenne 5 befindet.

In Fig. 2a ist der Fall dargestellt, dass das Verbindungskabel 3 nicht oder nicht korrekt mit dem zweiten Systemgerät 2 verbunden ist. Das RFID-Lesegerät 7 kann nur Daten des Kabeltransponders 10, aber nicht des RFID-Transponders 8 empfangen, so dass davon auszugehen ist, dass ein Kupplungsfehler vorliegt. Entsprechend liest das RFID-Lesegerät 7 gemäß Fig. 2b Daten des Kabeltransponders 11, der sich im Umfeld des RFID-Lesegeräts 7 befindet, nicht jedoch Daten des RFID-Transponders 8 im entfernten Systemgerät 2.

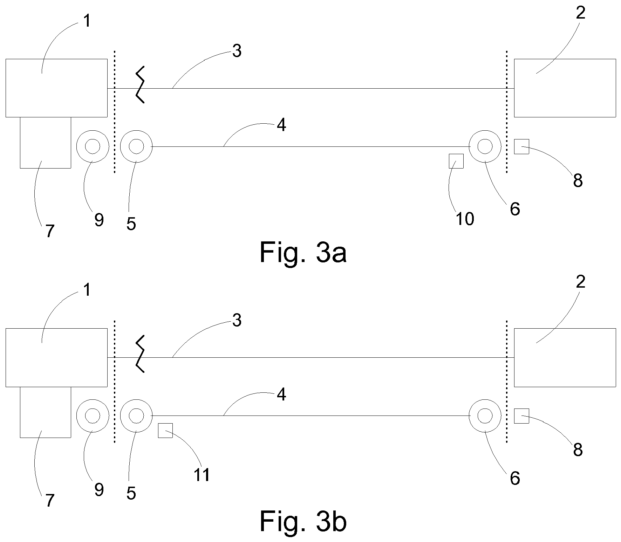

In Fall der Fig. 3, in dem die Verbindungsleitung 3 von dem ersten Systemgerät 1 getrennt ist, liest das RFID-Lesegerät 7 weder im Fall der Fig. 3a noch im Fall der Fig. 3b Daten der Kabeltransponder 10 oder 11. Aufgrund der fehlerhaften Kupplungsverbindung kann in diesem Fall auch kein Auslesen des RFID-Transponders 8 des zweiten Systemgeräts 2 erfolgen, unabhängig davon, ob die entsprechende Kupplungsverbindung "richtig" gesetzt ist.

Es ist daher von besonderer Bedeutung, zunächst eine "richtige" Zuordnung der Verbindungsleitung 3 zu dem Anschluss herzustellen, an dem das RFID-Lesegerät 7 angeordnet ist.

Die elektrische Leitungsverbindung 4 kann der Verbindungsleitung 3 fest zugeordnet sein, wobei die Kabeltransponder 10 bzw. 11 vorzugsweise fest in die jeweiligen Kupplungselemente eingebracht sind, insbesondere auf einer in den Stecker eingegossenen Leitungsplatine, oder sie können auch getrennt vom Kabel hergestellt sein und nachträglich mit dem Kabel verbunden werden, z. B. über Klemmverbindungen, wobei die Enden der Leitungsverbindung 4 über Rastelemente mit den Kupplungselementen verbunden werden. Letztere Ausführungsform ist vorzugsweise bei Lichtleiterkabeln verwendbar, da eine gleichzeitige Herstellung von optischen Kabeln und elektrischen Leitungsverbindungen herstellungstechnisch problematisch ist.

### Bezugszeichen

- 1: erstes Systemgerät
- 2: zweites Systemgerät
- 3: Verbindungsleitung
- 4: Leitungsverbindung
- 5: erste Antenne
- 6: zweite Antenne
- 7: RFID-Lesegerät
- 8: RFID-Transponder
- 9: Leseantenne
- 10: Kabeltransponder
- 11: Kabeltransponder

## Patentansprüche

1. Verbindungsleitung zur Übertragung von Daten, Energie oder Fluiden zwischen zwei örtlich getrennt angeordneten Systemgeräten (1, 2), wobei die Enden der Verbindungsleitung (3) jeweils mit Kupplungselementen zum Anschluss an Anschlusselemente der Systemgeräte (1, 2) versehen sind, welche mit RFID-Lesegeräten (7) bzw. Transpondern (8) ausgestattet sind, und die Kupplungselemente der Verbindungsleitung (3) mit jeweils einer elektrischen Antennenanordnung (5, 6) versehen sind, die über eine der Verbindungsleitung (3) zugeordnete elektrische Leitungsverbindung (4) miteinander gekoppelt sind, wobei wenigstens eines der Kupplungselemente ferner mit einem RFID-Kabeltransponder (10, 11) versehen ist, der sich in Funkreichweite einer der Antennenanordnungen (5, 6) befindet, **dadurch gekennzeichnet, dass** der RFID-Kabeltransponder (10, 11) gespeichterte Daten über physikalische Eigenschaften der Verbindungsleitung enthält.

2. Verbindungsleitung nach Anspruch 1, welche mit einem ersten Kupplungselement zum Anschluss an ein mit einem RFID-Lesegerät (7) ausgestattetes erstes Systemgerät (1) ausgestattet ist, und welche als Y-förmige Verzweigungsleitung ausgestaltet ist, an deren wenigstens einem Schenkelende ein mit einem Kabeltransponder versehenes Kupplungselement zum jeweiligen Anschluss an ein Systemgerät vorgesehen ist.

3. Verbindungsleitung nach Anspruch 1 oder 2, **dadurch gekennzeichnet, dass** der Kabeltransponder (10, 11) sich auf einer Schaltungsplatine an einem der Kupplungselemente befindet, welche ferner mit einer der Antennenanordnungen (5, 6) bestückt ist.

4. Verbindungsleitung nach Anspruch 1 oder 2 in der Ausgestaltung als abgeschirmtes elektrisches Datenkabel.

5. Verbindungsleitung nach Anspruch 1 oder 2 in der Ausgestaltung als Lichtleiterkabel.

6. Verbindungsleitung nach Anspruch 1 oder 2 in der Ausgestaltung als elektrisches Kabel.

7. Verbindungsleitung nach Anspruch 1 oder 2 in der Ausgestaltung als Schlauch- oder Rohrleitung.

8. System zur Feststellung des Verbindungszustands wenigstens zweier örtlich getrennt angeordneter Systemgeräte (1, 2) zueinander, die zur Übertragung von Daten, Energie oder Fluiden mittels einer Verbindungsleitung (3) nach Anspruch 1 miteinander verbindbar sind, wobei an einem ersten (1) der wenigstens zwei Systemgeräte ein RFID-Lesegerät (7) und an einem anderen (2) der Systemgeräte ein RFID-Transponder (8) angeordnet ist, wobei die gespeicherten Daten von einem RFID-Lesegerät (7) an einem der Systemgeräte (1) auswertbar sind.

9. System nach Anspruch 8, **dadurch gekennzeichnet, dass** die Daten des RFID-Kabeltransponders (10, 11) über eine der Antennenanordnungen (5, 6) der Verbindungsleitung (3) zu einem RFID-Lesegerät (7) übertragbar sind.

10. System nach Anspruch 9, **dadurch gekennzeichnet, dass** der RFID-Kabeltransponder (10, 11) an der Verbindungsleitung (3) in räumlicher Nähe einer Antennenanordnung (5, 6) befestigt ist.

11. Verfahren zur Feststellung des Verbindungszustandes wenigstens zweier örtlich getrennt angeordneter Systemgeräte (1, 2) zueinander mittels eines Systems nach Anspruch 8, wobei nach Anschluss eines Kupplungselements am ersten Ende der Verbindungsleitung (3) an ein Anschlusselement eines mit einem RFID-Lesegerät (7) versehenen ersten Systemgeräts (1) für den Fall,
a) dass sich ein RFID-Kabeltransponder (10) an dem dem ersten Systemgerät (1) gegenüberliegenden zweiten Ende der Verbindungsleitung (3) befindet, durch Auswertung von am RFID-Lesegerät (7) empfangenen Daten festgestellt wird, ob zusätzlich zu den empfangenen Daten des RFID-Kabeltransponders (10) weitere Daten eines RFID-Transponders (8) eines entfernten zweiten Systemgeräts (2) empfangen werden, oder für den Fall,
b) dass sich ein Kabeltransponder (11) an dem dem ersten Systemgerät (1) zugeordneten ersten Ende der Verbindungsleitung (3) befindet, durch Auswertung von am RFID-Lesegerät (7) empfangenen Daten festgestellt wird, ob Daten eines RFID-Transponders (8) eines entfernten Systemgeräts empfangen werden,
wobei durch Auswertung der vom RFID-Lesegerät (7) empfangenen Daten die Art des Verbindungszustands der Systemgeräte zueinander ermittelt wird.

12. Verfahren nach Anspruch 11, **dadurch gekennzeichnet, dass** das RFID-Lesegerät (7) zusätzlich den Inhalt von in dem RFID-Transponder (8) des zweiten Systemgeräts (2) und/oder dem Kabeltransponder (10, 11) gespeicherten Daten feststellt und auswertet.

## Claims

1. Connection line for transmitting data, energy or fluids between two system devices (1, 2) arranged in different locations, the ends of the connection line (3) each being provided with coupling elements for connecting to terminal elements of the system devices (1, 2), which are equipped with RFID readers (7) resp. transponders (8), and the coupling elements of the connection line (3) each being provided with one electric antenna assembly (5, 6), which assemblies are coupled to one another by means of an electrical line connection (4) associated with the connection line (3), at least one of the coupling elements further being provided with an RFID cable transponder (10, 11) located in radio range of one of the antenna assemblies (5, 6), **characterised in that** the RFID cable transponder (10, 11) contains stored data regarding physical properties of the connection line.

2. Connection line according to claim 1, which is equipped with a first coupling element for connecting to a first system device (1) equipped with an RFID reader (7), and which is designed as a Y-shaped branch line, on the at least one leg end of which a coupling element provided with a cable transponder is provided for connecting to a system device.

3. Connection line according to either claim 1 or claim 2, **characterised in that** the cable transponder (10, 11) is located on a circuit board on one of the coupling elements, which is further equipped with one of the antenna assemblies (5, 6).

4. Connection line according to either claim 1 or claim 2, designed as a shielded electric data cable.

5. Connection line according to either claim 1 or claim 2, designed as a fibre optic cable.

6. Connection line according to either claim 1 or claim 2, designed as an electric cable.

7. Connection line according to either claim 1 or claim 2, designed as a hose or tube line.

8. System for determining the state of a connection between at least two system devices (1, 2) arranged in different locations, which can be interconnected by means of a connection line (3) according to claim 1 in order to transmit data, energy or fluids, wherein an RFID reader (7) is arranged on a first (1) of the at least two system devices and an RFID transponder (8) being arranged on another (2) of the system devices, wherein the stored data can be analysed by means of an RFID reader (7) on one of the system devices (1).

9. System according to claim 8, **characterised in that** the data on the RFID cable transponder (10, 11) can be transmitted to an RFID reader (7) by means of one of the antenna assemblies (5, 6) of the connection line (3).

10. System according to claim 9, **characterised in that** the RFID cable transponder (10, 11) is attached to the connection line (3) in spatial proximity to an antenna assembly (5, 6).

11. Method for determining the state of a connection between at least two system devices (1, 2), arranged in different locations, by means of a system according to claim 8, wherein, once a coupling element on the first end of the connection line (3) has been connected to a terminal element of a first system device (1) provided with an RFID reader (7),
a) if an RFID cable transponder (10) is located on the second end of the connection line (3) opposite the first system device (1), it is established by analysing data received at the RFID reader (7) whether or not additional data from an RFID transponder (8) of a remote second system device (2) is being picked up in addition to the data picked up from the RFID cable transponder (10), or
b) if an RFID cable transponder (11) is located on the first end of the connection line (3) associated with the first system device (1), it is established by analysing data received at the RFID reader (7) whether or not data from an RFID transponder (8) of a remote system device is being picked up,
wherein the nature of the state of a connection between the system devices is established by analysing the data picked up by the RFID reader (7).

12. Method according to claim 11, **characterised in that** the RFID reader (7) additionally determines and analyses the content of data stored in the RFID transponder (8) of the second system device (2) and/or in the cable transponder (10, 11).

## Revendications

1. Ligne de liaison pour la transmission de données, d'énergie ou de fluides entre deux appareils de système (1, 2) séparés dans l'espace, les extrémités de la ligne de liaison (3) étant pourvues d'éléments d'accouplement respectifs, pour le raccordement à des éléments de raccordement des appareils de système (1, 2), qui sont équipés de lecteurs RFID (7) et de transpondeurs (8), respectivement, et les éléments d'accouplement de la ligne de liaison (3) étant pourvus de dispositifs électriques à antenne respectifs (5, 6) qui sont couplés entre eux par l'intermédiaire d'une ligne de liaison électrique (4) associée à ladite ligne de liaison (3), l'un au moins des éléments d'accouplement étant également pourvu d'un transpondeur à câble RFID (10, 11) qui se trouve à portée de l'un des dispositifs à antenne (5, 6), **caractérisée en ce que** le transpondeur à câble RFID (10, 11) contient des données mises en mémoire sur les propriétés physiques de la ligne de liaison.

2. Ligne de liaison selon la revendication 1, qui est équipée d'un premier élément d'accouplement pour le raccordement à un premier appareil de système (1) équipé d'un lecteur RFID (7), et qui est conçue comme une ligne de jonction en Y à au moins une extrémité de branche de laquelle est prévu un élément d'accouplement pourvu d'un transpondeur à câble, pour le raccordement à un appareil de système.

3. Ligne de liaison selon la revendication 1 ou 2, **caractérisée en ce que** le transpondeur à câble (10, 11) se trouve sur une plaquette de montage sur l'un des éléments d'accouplement, qui est également dotée de l'un des dispositifs à antenne (5, 6).

4. Ligne de liaison selon la revendication 1 ou 2, sous la forme d'un câble électrique de données blindé.

5. Ligne de liaison selon la revendication 1 ou 2, sous la forme d'un câble optique.

6. Ligne de liaison selon la revendication 1 ou 2, sous la forme d'un câble électrique.

7. Ligne de liaison selon la revendication 1 ou 2, sous la forme d'une conduite souple ou d'une canalisation.

8. Système pour déterminer l'état de liaison d'au moins deux appareils de système (1, 2) séparés dans l'espace qui sont aptes à être reliés à l'aide d'une ligne de liaison (3) selon la revendication 1 en vue de la transmission de données, d'énergie ou de fluides, un lecteur RFID (7) étant disposé sur un premier appareil de système (1), parmi les deux appareils de système ou plus, tandis qu'un transpondeur RFID (8) est disposé sur l'autre appareil de système (2), les données mises en mémoire pouvant être analysées par un lecteur RFID (7) sur l'un des appareils de système (1).

9. Système selon la revendication 8, **caractérisé en ce que** les données du transpondeur à câble RFID (10, 11) peuvent être transmises par l'intermédiaire de l'un des dispositifs à antenne (5, 6) de la ligne de liaison (3) à un lecteur RFID (7).

10. Système selon la revendication 9, **caractérisé en ce que** le transpondeur à câble RFID (10, 11) est fixé à la ligne de liaison (3) à proximité du dispositif à antenne (5, 6).

11. Procédé pour déterminer l'état de liaison d'au moins deux appareils de système (1, 2) séparés dans l'espace, à l'aide d'un système selon la revendication 8, selon lequel après raccordement d'un élément d'accouplement prévu à la première extrémité de la ligne de liaison (3), à un élément de raccordement d'un premier appareil de système (1) pourvu d'un lecteur RFID (7), pour le cas
a) où un transpondeur à câble RFID (10) se trouve à la deuxième extrémité, opposée au premier appareil de système (1), de la ligne de liaison (3), il est déterminé, grâce à l'analyse de données reçues au niveau du lecteur RFID (7), si en plus des données du transpondeur à câble RFID (10) reçues, d'autres données d'un transpondeur RFID (8) d'un deuxième appareil de système (2) éloigné sont reçues, ou pour le cas
b) où un transpondeur à câble (11) se trouve à la première extrémité, associée au premier appareil de système (1), de la ligne de liaison (3), il est déterminé, grâce à l'analyse de données reçues au niveau du lecteur RFID (7), si des données d'un transpondeur RFID (8) d'un appareil de système éloigné sont reçues,
le type de l'état de liaison des appareils de système l'un par rapport à l'autre étant défini grâce à l'analyse des données reçues par le lecteur RFID (7).

12. Procédé selon la revendication 11, **caractérisé en ce que** le lecteur RFID (7) détermine et analyse en supplément le contenu de données mises en mémoire dans le transpondeur RFID (8) du deuxième appareil de système (2) et/ou dans le transpondeur à câble (10, 11).
